# EUROPEAN PATENT SPECIFICATION

(11) **EP 1 862 412 B1**
(45) Date of publication and mention of the grant of the patent: **01.04.2009**
(21) Application number: 07075370.2
(22) Date of filing: 15.05.2007
(51) Int. Cl.: B65G 63/02, B61B 1/00, B61K 1/02

(54) **Device for the transport of goods**
Vorrichtung zum Transport von Waren
Dispositif de transport de marchandises

(30) Priority: 30.05.2006 BE 200600303
(43) Date of publication of application: 05.12.2007
(73) Proprietor: Denys, Naamloze Vennootschap, 9032 Wondelgem (BE)
(72) Inventor: Van Wassenhove, Johan Marcel Maurice, 9840 De Pinte (BE)
(74) Representative: Donné, Eddy

(56) References cited:
- FR-A- 1 500 098
- US-A- 3 958 512

## Description

The present invention concerns a device for the transport of goods, in particular whereby a part of the transport is carried out underground.

The device is useful for example for the underground container transport in a port or for the underground transport of consumer goods from a central warehouse to various distribution centres.

The existing transport systems which make use of the public road are subject to jams and require a large amount of energy per transported volume.

The present invention aims a device for the transport of goods which does not have these and other disadvantages and with which goods can be transported in an ecologically sound and cost-effective manner within a port zone, a city zone or the like.

To this end, the device for the transport of goods mainly consists of an underground transport system with transport platforms that are mutually connected in a closed circuit and that are continuously moved at an adjustable, but mainly constant speed of rotation, and of at least two loading and unloading terminals that are each provided with intermediary means of transport that mainly consist of a straddle carrier that can be moved over the transport platforms, whereby these intermediary means of transport can speed up goods to be transported from a standstill to the speed of rotation of the transport platforms, whereby the device is also provided with transfer means which make it possible to transfer the goods from the above-mentioned intermediary means of transport to the transport platforms or vice versa.

An advantage is that the transport platforms which are mutually connected in a closed circuit are moved unhindered by and independently from existing transport infrastructures, as a result of which such a system is characterised by a very large transport capacity which cannot be obtained with other systems of transport.

Moreover, such an arrangement makes it possible to overcome slopes in the linear profile that are much larger than the ones that can be applied in railways, typically 12/1000, and that are even larger than the ones that can be applied in road transport, typically 40/1000. Thus can be obtained an ideal linear profile without any additional costs for bottom protection in waterways.

Moreover, the transport system does not depend on the weather conditions. The transport system can be strongly automated, which implies that its operation can be guaranteed around the clock without all too many additional costs.

Moreover, such a transport system according to the invention does not raise any new obstacles to the existing transport infrastructure, such as for example railway crossings, bridges or other junctions with existing traffic roads.

In order to better explain the characteristics of the invention, the following preferred embodiment of a device for the transport of goods according to the invention is given as an example only without being limitative in any way, with reference to the accompanying drawings, in which:
figure 1 schematically represents a building plan of a transport device according to the invention, seen from above;
figure 2 schematically represents the part indicated by F2 in figure 1 seen in perspective;
figure 3 represents the part indicated by F3 in figure 2 to a larger scale and in more detail;
figure 4 represents the part as represented in figure 2, but for an alternative not claimed embodiment;
figure 5 represents the part as indicated by F5 in

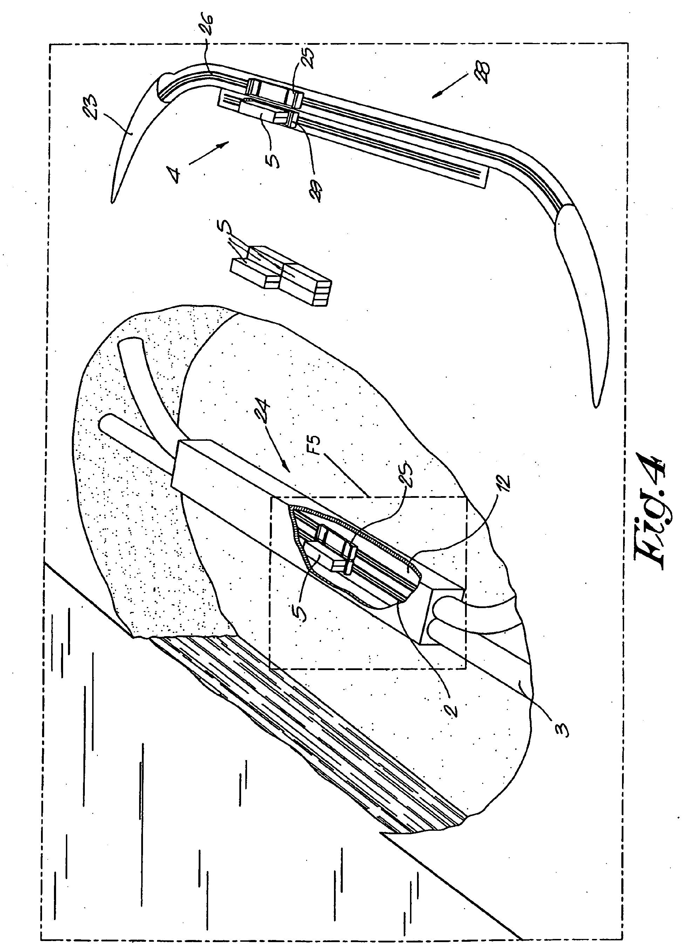

figure 4 to a larger scale and in more detail.

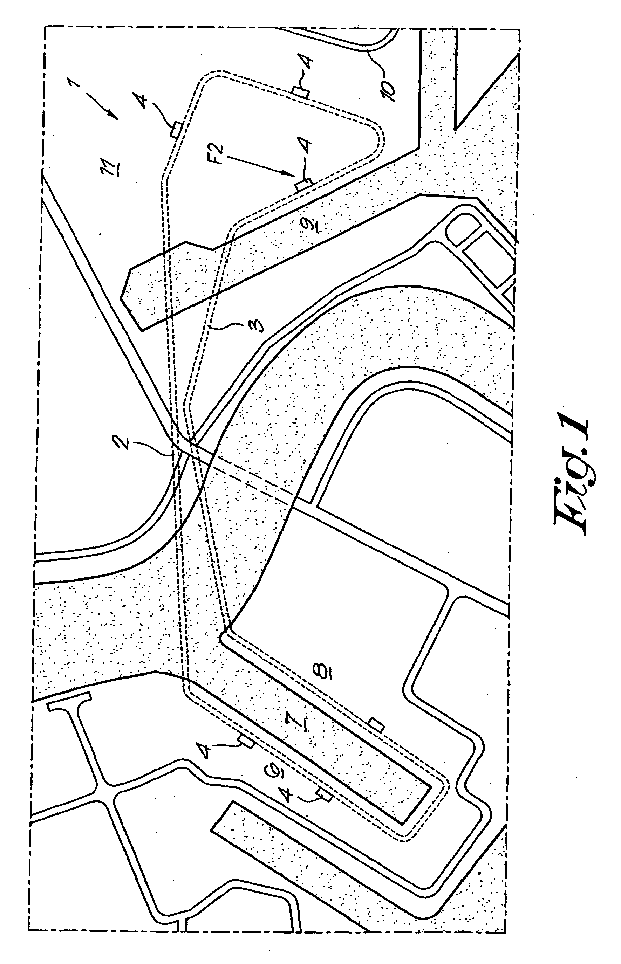

Figure 1 is a top view of a building plan for a transport device 1 according to the invention.

The transport device 1 mainly consists of a looped underground transport system which is in this case provided with a railway 2 in a tunnel 3 and with different loading and unloading terminals 4, provided in different places along the railway 2.

In this example, the transport device 1 is situated in a port and it is designed to move goods, in this case containers 5, between different sites.

In particular, two loading and unloading terminals 4 are provided in this case at a first quay 6 of a first dock 7 where sea-going vessels are loaded and unloaded, a third loading and unloading terminal 4 at the opposite quay 8 of the same dock 6, a fourth loading and unloading terminal 4 at a dock 9 for inland navigation moved further away from the latter, a fifth loading and unloading terminal 4 in the vicinity of a railroad 10, and a sixth loading and unloading terminal 4 in the vicinity of a storage space 11.

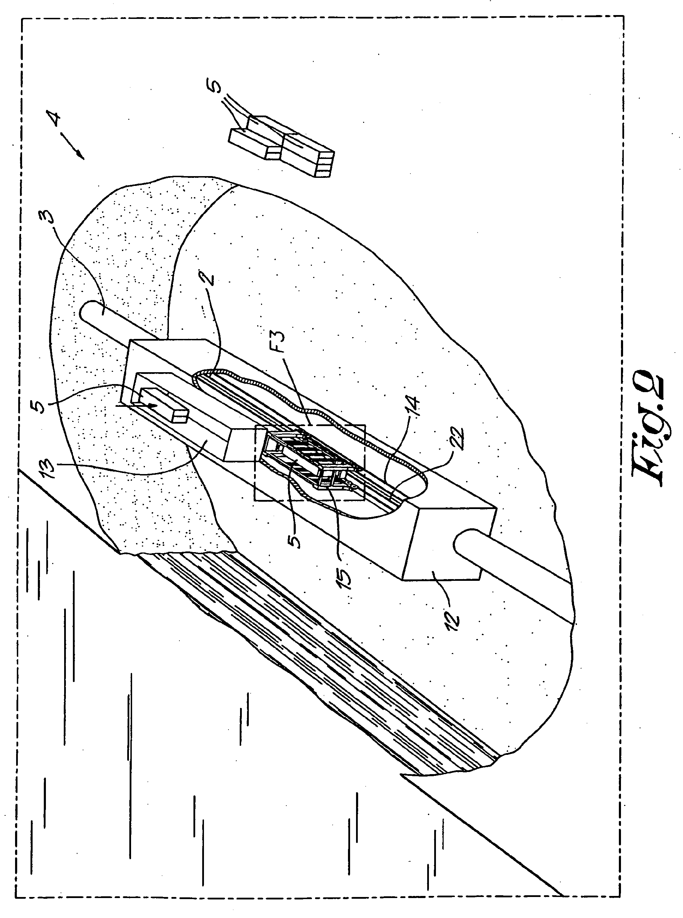

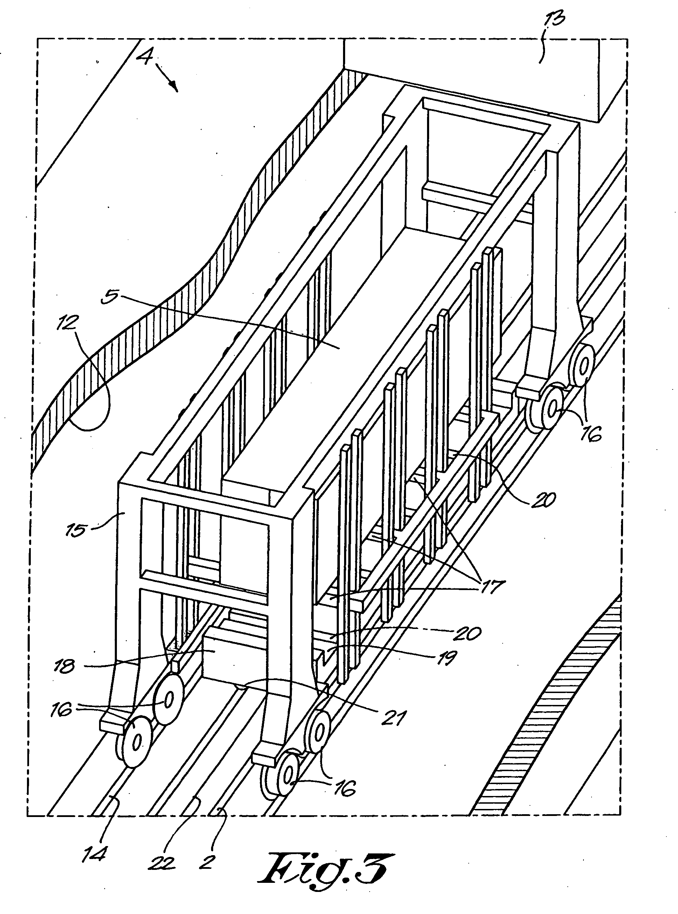

A loading and unloading terminal 4, as is represented more in detail in figures 2 and 3, in this embodiment mainly consists of an underground room 12 which is connected to the tunnel 3 through which the looped railway 2 runs.

The underground room 12 is provided with a supply shaft 13 which connects the room 12 to the site where the containers 5 are situated.

The underground room 12 is provided with a separate rail strip 14 extending along a segment of the looped railway 2 and on which is provided a straddle carrier 15 for loading and/or unloading containers 5.

The straddle carrier 15 is built as a supporting structure, provided on rail wheels 16, and it is driven such that it can be moved to and fro on the rail strip 14.

The straddle carrier 15 is provided with sleepers 7 here which can be moved up and down, on which a container 5 can be provided, and which can also be laterally moved.

On the looped railway 2 are provided transport platforms 18, of the deep loader type in this case, whose bearing surface 19 is provided with recesses 20. The transport platforms 18 are provided on rail wheels 21, and they are connected to each other at a regular mutual distance of for example 50 m by means of a chain 22, and they thus form a closed circuit.

The chain 22 is continuously driven by means of non-represented electric engines which are placed at equal mutual distances here and which are equipped with frequency controls. Thus, the transport platforms 18 driven by the chain 22 are moved at an adjustable but predominantly constant speed of rotation between 1 and 2 m/sec.

The transport platforms 18 are equipped with non-represented clamping means to lock the containers 5 so as to secure the transport.

The working of the discussed transport device 1 according to the invention is simple and as follows.

The transport platforms 18 are moved together with the chain 22 in a continuous and constant manner at a predominantly constant speed of rotation.

A transport platform 18 can be loaded by supplying a container 5 to the straddle carrier 15.

This can be done by means of the usual container lifters and via the supply shaft 13.

The container 5 is placed on the sleepers 17 of the straddle carrier 15 while the straddle carrier 15 is standing still and while the sleepers 17 are placed in a top position.

The straddle carrier 15 is then accelerated from standstill over the rail strip 14 until it reaches a speed which corresponds to the speed of rotation of the transport platforms 18. The straddle carrier 15 reaches this speed for example after it has been moved over 15 m.

The starting time and an appropriate control of the acceleration guarantee that the straddle carrier 15 is positioned exactly opposite a loadable transport platform 18 and can be moved together with the latter at a corresponding speed.

Such a co-ordinated movement over a sufficiently large distance of for example 30 m makes it possible to move the container 5 from the straddle carrier 15 onto the underlying transport platform 18, whereby neither the container 5, nor the underlying transport platform 18 undergoes any significant accelerations in the direction of movement.

This guarantees that no significant additional tensions are created in the chain 22 and that neither the drive of the transport platforms 18 nor the chain 22 will require any significant adjustment in order to maintain the constant speed of rotation when putting up a container 5.

The removal takes place by lowering the sleepers 17 until the container 5 rests on the bearing surface 19 of the transport platform 18, which is provided with recesses 20 where the sleepers 17 are situated.

The sleepers 17, which serve as transfer means here, are then laterally moved and the structure to which they are connected is moved up, such that the free passage of the loaded container 5 on a transport platform 18 can be guaranteed.

The loaded container 5 is then clamped on the transport platform 18 by means of the above-mentioned clamping means so as to secure any further transport.

The straddle carrier 15 is then moved again into the position opposite the supply shaft 13.

It is clear that, in order to unload the loaded container 5 from the transport platform 18 in a further loading and unloading terminal 4, the above-mentioned steps are carried out in reverse order.

Indeed, by moving the empty straddle carrier 15 over a loaded transport platform 18 at a corresponding speed and exactly in accordance with the transport platform 18, the sleepers 17 can be placed under the container 5 to be unloaded by putting them in the recesses 20.

Next, any possible clamping means between the transport platform 18 and the container 5 are released, and the container 5 is lifted from the transport platform 18 during the co-ordinated movement. The straddle carrier 15 can then be slowed down, brought to a standstill and moved back under the supply shaft 13.

It is clear that the rail strip 14 must be made sufficiently long in order to be able to load and unload containers 5 also at high speeds of rotation.

The straddle carrier 15 serves as an intermediary transport means which brings the containers 5 from a standstill to a steady moving transport platform 18, or vice versa. Said intermediary transport means realises this by constantly picking up the containers 5, accelerating or decelerating them and by putting them back.

In the embodiment as discussed, the straddle carrier 15 moves over the transport platforms 18. It is clear, however, that it can also move next to the transport platforms 18.

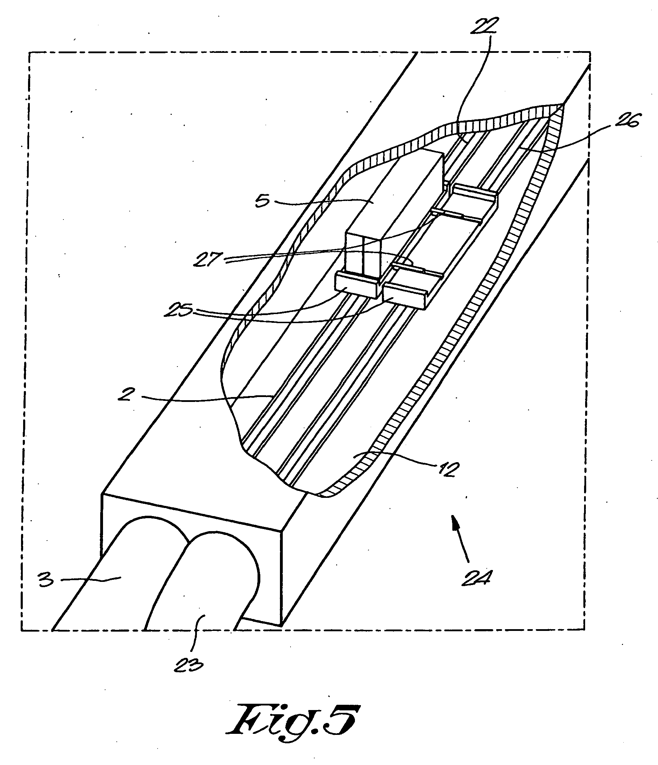

Figures 4 and 5 represent an alternative not claimed embodiment of a loading and unloading terminal 4 which differs from the above-discussed loading and unloading terminal 4 in that it is additionally provided with an intermediate looped railway 23 between the railway 2 and the intermediary transport means.

The intermediate looped railway 23 is provided partly underground here and extends over a certain segment 24 along the railway 2.

The intermediate looped railway 23 is provided with second transport platforms 25 which are all mutually connected by means of a second chain 26, such that a second closed circuit is formed. These transport platforms 25 are moved at an equal speed of rotation, such that a second transport platform 25, at the segment 24 where it moves along the railway 2, always moves at the same speed and in line with a transport platform 18.

Each of the transport platforms 25 of the intermediate looped railway 23 are provided with laterally operating telescopic forks 27 which serve as transfer means for loading or unloading the containers 5.

The aboveground part of the intermediate looped railway 23 has a predominantly rectilinear segment along which the intermediary transport means is erected.

In this embodiment, the intermediary transport means deviates somewhat from the embodiment as discussed above and as represented in figures 2 and 3.

Indeed, since the containers 5 can be supplied laterally in this embodiment, no straddle carrier 15 moving above the transport platforms 25 is required, but a shovel-type loader 29 whose construction is very similar to that of a transport platform 18 will do.

The shovel-type loader 29 comprises a supporting structure which is at least provided with a bearing surface 19 in which are provided recesses 20 which are positioned such that they can work in conjunction with the above-mentioned telescopic forks 27.

The shovel-type loader 29 is provided on a rail strip 14 provided next to the rectilinear segment 28.

The shovel-type loader 29, just as the straddle carrier 15, is provided on rail wheels 16 and is driven such that it can be moved to and fro on the rail strip 14, such that the same acceleration requirements as discussed for the straddle carrier 15 are met.

The working of such a transport device 1 according to the invention with a loading and unloading terminal 4 as represented in figures 4 and 5 is simple and as follows.

The transport platforms 18 are moved in a continuous manner by the chain 22 at a predominantly constant speed of rotation.

A transport platform 18 can be loaded by placing a container 5 on the shovel-type loader 29 by means of the usual container lifters.

The container 5 is provided on the bearing surface 19 of the shovel-type loader 29 while the shovel-type loader 29 is preferably standing still.

The shovel-type loader 29 is then accelerated from a standstill over the rail strip 14 until it reaches a speed which corresponds to the speed of rotation of the transport platforms 25. The shovel-type loader 29 reaches this speed for example after it has been moved over 20 m.

The starting time and an appropriate control of the acceleration guarantee that the shovel-type loader 29 is positioned exactly opposite a transport platform 25 and can be moved together with the latter over a certain length at a corresponding speed.

Such a co-ordinated movement over a sufficiently large distance of for example 40 m makes it possible to move the container 5 from the shovel-type loader 29 onto the transport platform 18 lying next to it, whereby neither the container 5, nor the underlying transport platform 25 undergo any significant accelerations in the direction of movement.

This guarantees that no significant additional tensions are created in the chain 26 and that neither the drive of the transport platforms 25 nor the chain 26 will require any significant adjustment in order to maintain the constant speed of rotation when putting up a container 5.

The removal takes place by moving the telescopic forks 27 into the recesses 20 in the shovel-type loader 29, by then lifting the forks 27 and the container 5 and moving them up to the transport platform 25 concerned.

The container 5 may then be locked on the transport platform 25 by means of clamping means so as to secure the intermediate transport via the intermediate looped railway 23 to next to the transport platform 18 of the looped railway 2 onto which the container 5 will be loaded.

The segment 24 over which the intermediate looped railway 23 runs along the railway 2 is sufficiently extensive, for example 40 m long, and makes it possible for the container 5 of the transport platform 25 to be moved onto the adjacent transport platform 18 concerned without neither the container 5, nor the underlying transport platform 18 undergoing any significant accelerations in the direction of movement, with the known advantages as discussed above.

Said movement is realised here by means of the telescopic forks 27.

The shovel-type loader 29, after the container 5 has been transferred onto the transport platform 25, is moved into the position again where a new container can be loaded on it, or from where it can be accelerated so as to be placed next to a loaded transport platform 25 so as to unload it.

Besides, the unloading of a container 5 is entirely similar to its loading, but the steps are carried out the other way round then.

As opposed to the uninterrupted and steady progress of the transport platforms 18 and 25 of both closed circuits, the shovel-type loader 29 makes alternating movements.

It is clear however that, alternatively, a shovel-type loader 29 can also be moved over a closed circuit, whereby, starting from a stationary loading or unloading position, it can be accelerated to the speed of rotation of the transport platforms 18 and/or 25, and whereby it is diverted into the above-mentioned loading position after the transfer of a container 5.

It is clear that such a transport device 1 according to the invention can also be used for the transport of other goods and that it can be implemented in different environments.

The transport platforms 18 and 25 are preferably multifunctional and they can support 22-feet-containers as well as 40-feet-containers. The load bearing capacity is preferably calculated on the basis of the maximal loading capacity of the 40-feet-containers, including the container's own weight.

The transport platforms 18 and 25 are preferably provided with rail wheels 21 in the front and at the back, turning independently from one another, so that they can take bends with a minimum of friction.

It is clear that the transport system must not be built on a railway and can also be composed of a chain of trolleys.

The transfer means can also be provided on the transport platforms, which are connected to the fixed environment, or they can be connected in another way to the intermediary means of transport or to an intermediate means of transport.

The present invention is by no means restricted to the above-described embodiments represented in the figures; on the contrary, such a device for the transport of goods can be made in all sorts of variants while still remaining within the scope of the invention as defined by the claims.

## Claims

1. Device for the transport of goods, wherein it mainly consists of an underground transport system with transport platforms (18) that are mutually connected in a closed circuit and that are continuously moved at an adjustable, but mainly constant speed of rotation, and of at least two loading and unloading terminals (4) that are each provided with intermediary means of transport that mainly consists of a straddle carrier (15) that can be moved over the transport platforms (18), whereby these intermediary means can speed up goods to be transported from a standstill to the speed of rotation of the transport platforms (18), whereby the device is also provided with transfer means which make it possible to transfer the goods from the above-mentioned intermediary means of transport to the transport platforms (18) or vice versa.

2. Device according to claim 1, **characterised in that** the intermediary means of transport are built as a supporting structure that can be moved, provided on rail wheels (16), a controlled drive which can accelerate the supporting structure that can be moved up to a speed which corresponds to the speed of the mutually connected transport platforms (18), and a sufficiently long rail strip (14) or the like on which said acceleration can be realised and on which the goods can be moved over a certain distance at a corresponding speed along the transport platforms (18).

3. Device according to claim 1 or 2, **characterised in that** the intermediary means of transport mainly consist of a shovel-type loader (15) that can be moved next to the transport platforms (18).

4. Device according to claim 2, **characterised in that** the rail strip (14) comprises a predominantly rectilinear part and is possibly built as a closed circuit.

5. Device according to claim 1, **characterised in that** the underground transport system mainly consists of a railway (2) in a tunnel (3) whereby the transport platforms (18) are provided with rail wheels (13) which fit on the railway (2).

6. Device according to claim 1 or 5, **characterised in that** the transport platforms (18) are mutually connected by means of a chain (22) and preferably form a closed circuit.

7. Device according to claim 1, 5 or 6, **characterised in that** the chain (22) is continuously driven by means of motors which may be positioned at equal distances from one another and which are preferably equipped with frequency controls.

8. Device according to claim 1, **characterised in that** the transport platforms (18) are of the deep loader type, and are provided with a bearing surface (19) in which are provided recesses (20).

9. Device according to claim 1 or 5, **characterised in that** a loading and unloading terminal (4) is additionally provided between an intermediate looped railway (23) which is provided between the underground transport system and the intermediary means of transport and onto which are provided second transport platforms (25) which are moved at a constant speed which corresponds to the speed of rotation of the transport platforms (18) of the underground transport system.

10. Device according to claim 6, **characterised in that** the intermediate looped railway (23) is partly provided underground on the one hand and extends there over a certain segment (24) along the transport system, if necessary along the railway (2), and is provided partly aboveground on the other hand, where it can work in conjunction with the intermediary means of transport.

11. Device according to claim 1, **characterised in that** the transfer means mainly consist of sleepers (17) which can be moved up and down and onto which can be provided a container (5), and which can also be laterally moved.

12. Device according to claim 8 and 11, **characterised in that** the sleepers (17) can work in conjunction with the recesses (20) in the transport platforms (18).

13. Device according to claim 1, **characterised in that** the transfer means mainly consist of laterally operating forks (27) which are provided on the intermediary means of transport or if necessary on the transport platforms (25) of an intermediate looped railway (23) which may possibly be provided.

## Patentansprüche

1. Vorrichtung zum Transport von Waren, wobei sie im Wesentlichen aus einem unterirdischen Transportsystem mit Transportplattformen (18) besteht, die in einem geschlossenen Kreislauf miteinander verbunden sind und die kontinuierlich auf einer einstellbaren, jedoch im Wesentlichen konstanten Umlaufgeschwindigkeit bewegt werden, und aus mindestens zwei Be- und Entladestationen (4), die jede mit Zwischen-Transportmitteln versehen sind, die im Wesentlichen aus einem Portalhubwagen (15) bestehen, der über den Transportplattformen (18) bewegt werden kann, wobei diese Zwischenmittel zu transportierende Waren von einem Stillstand bis auf die Umlaufgeschwindigkeit der Transportplattformen (18) beschleunigen können, wobei die Vorrichtung auch mit Umlademitteln versehen ist, die es ermöglichen, die Waren von dem vorgenannten Zwischen-Transportmittel zu den Transportplattformen (18) umzuladen oder umgekehrt.

2. Vorrichtung nach Anspruch 1, **dadurch gekennzeichnet, dass** die Zwischen-Transportmittel aufgebaut sind als eine auf Laufrädern (16) angebrachte, verfahrbare Tragestruktur, ein gesteuerter Antrieb, der die verfahrbare Tragestruktur bis auf eine Geschwindigkeit beschleunigen kann, die der Geschwindigkeit der miteinander verbundenen Transportplattformen (18) entspricht, und ein ausreichend langer Gleisstreifen (14) oder ähnliches, worauf besagte Beschleunigung verwirklicht werden kann und worauf die Waren über einen bestimmten Abstand auf einer entsprechenden Geschwindigkeit entlang den Transportplattformen (18) transportiert werden können.

3. Vorrichtung nach Anspruch 1 oder 2, **dadurch gekennzeichnet, dass** die Zwischen-Transportmittel im Wesentlichen aus einem Ladewagen (15) vom Schaufeltyp bestehen, der in der Nähe der Transportplattformen (18) bewegt werden kann.

4. Vorrichtung nach Anspruch 2, **dadurch gekennzeichnet, dass** der Gleisstreifen (14) einen vorwiegend geradlinigen Teil umfasst und eventuell als geschlossener Kreislauf gebaut ist.

5. Vorrichtung nach Anspruch 1, **dadurch gekennzeichnet, dass** das unterirdische Transportsystem im Wesentlichen aus einer Trasse (2) in einem Tunnel (3) besteht, wobei die Transportplattformen (18) mit Laufrädern (13) versehen sind, die auf die Trasse (2) passen.

6. Vorrichtung nach Anspruch 1 oder 5, **dadurch gekennzeichnet, dass** die Transportplattformen (18) mittels einer Kette (22) miteinander verbunden sind und bevorzugt einen geschlossenen Kreislauf bilden.

7. Vorrichtung nach Anspruch 1, 5 oder 6, **dadurch gekennzeichnet, dass** die Kette (22) mittels Motoren kontinuierlich angetrieben wird, die in gleichen Abständen zueinander angeordnet sein können und die bevorzugt mit Frequenzreglern ausgestattet sind.

8. Vorrichtung nach Anspruch 1, **dadurch gekennzeichnet, dass** die Transportplattformen (18) vom Tiefladertyp sind und mit einer Auflagerfläche (19) versehen sind, worin Ausnehmungen (20) vorgesehen sind.

9. Vorrichtung nach Anspruch 1 oder 5, **dadurch gekennzeichnet, dass** eine Be- und Entladestation (4) zusätzlich mit einer dazwischengelegenen schlaufenförmigen Trasse (23) versehen ist, die zwischen dem unterirdischen Transportsystem und dem Zwischen-Transportmittel vorgesehen ist und worauf zweite Transportplattformen (25) vorgesehen sind, die mit einer konstanten Geschwindigkeit verfahren werden, die der Umlaufgeschwindigkeit der Transportplattformen (18) des unterirdischen Transportsystems entspricht.

10. Vorrichtung nach Anspruch 6, **dadurch gekennzeichnet, dass** die dazwischengelegene schlaufenförmige Trasse (23) einerseits teilweise unterirdisch angebracht ist und sich dort über einen bestimmten Abschnitt (24) entlang dem Transportsystem, gegebenenfalls entlang der Trasse (2), erstreckt, und andererseits teilweise oberirdisch angebracht ist, wo sie mit den Zwischen-Transportmitteln zusammenwirken kann.

11. Vorrichtung nach Anspruch 1, **dadurch gekennzeichnet, dass** die Umlademittel im Wesentlichen aus Querträgern (17) bestehen, die auf- und abbewegt werden können, worauf ein Container (5) angebracht werden kann, und die auch seitwärts bewegt werden können.

12. Vorrichtung nach Anspruch 8 und 11, **dadurch gekennzeichnet, dass** die Querträger (17) mit den Ausnehmungen (20) in den Transportplattformen (18) zusammenwirken können.

13. Vorrichtung nach Anspruch 1, **dadurch gekennzeichnet, dass** die Umlademittel im Wesentlichen aus seitwärts wirkenden Gabeln (27) bestehen, die auf den Zwischen-Transportmitteln oder gegebenenfalls auf den Transportplattformen (25) einer eventuell vorgesehenen dazwischengelegenen schlaufenförmigen Trasse (23) vorgesehen sind.

## Revendications

1. Dispositif pour le transport de marchandises, dans lequel il est principalement constitué par un système de transport souterrain comprenant des plates-formes de transport (18) qui sont reliées l'une à l'autre en un circuit fermé et qui sont déplacées en continu à une vitesse de rotation réglable, mais principalement constante, et par au moins deux terminaux de chargement et de déchargement (4) qui sont respectivement équipés de moyens intermédiaires de transport qui sont constitués principalement d'un chariot cavalier (15) qui peut se déplacer par-dessus les plates-formes de transport (18), ces moyens intermédiaires pouvant soumettre des marchandises à transporter à une accélération depuis un état d'arrêt jusqu'à la vitesse de rotation des plates-formes de transport (18), le dispositif étant également équipé de moyens de transfert qui permettent de transférer les marchandises depuis les moyens intermédiaires de transports susmentionnés jusqu'aux plates-formes de transport (18) ou vice versa.

2. Dispositif selon la revendication 1, **caractérisé en ce que** les moyens intermédiaires de transport sont conçus sous la forme d'une structure de support mobile, prévue sur des galets de roulement (16), sous la forme d'un entraînement régulé qui permet d'accélérer la structure de support qui peut faire l'objet d'une accélération jusqu'à une vitesse qui correspond à la vitesse des plates-formes de transport (18) reliées l'une à l'autre, et sous la forme d'un ruban de rail (14) ou analogue suffisamment long sur lequel ladite accélération peut être réalisée et sur lequel les marchandises peuvent être déplacées sur une certaine distance à une vitesse correspondante le long des plates-formes de transport (18).

3. Dispositif selon la revendication 1 ou 2, **caractérisé en ce que** les moyens intermédiaires de transport sont constitués à titre principal d'un chargeur (15) de type pelle qui peut se déplacer à côté des plates-formes de transport (18).

4. Dispositif selon la revendication 2, **caractérisé en ce que** le ruban de rail (14) comprend une partie principalement rectiligne et est éventuellement conçu à la manière d'un circuit fermé.

5. Dispositif selon la revendication 1, **caractérisé en ce que** le système de transport souterrain est constitué principalement d'une voie ferrée (2) dans un tunnel (3), les plates-formes de transport (18) étant munies de galets de roulement (13) qui viennent se disposer sur la voie ferrée (2).

6. Dispositif selon la revendication 1 ou 5, **caractérisé en ce que** les plates-formes de transport (18) sont reliées l'une à l'autre au moyen d'une chaîne (22) et forment de préférence un circuit fermé.

7. Dispositif selon la revendication 1, 5 ou 6, **caractérisé en ce que** la chaîne (22) est entraînée en continu au moyen de moteurs qui peuvent être placés dans des positions réciproquement équidistantes et qui sont de préférence équipés de régulations par la fréquence.

8. Dispositif selon la revendication 1, **caractérisé en ce que** les plates-formes de transport (18) sont du type à wagon surbaissé et sont équipées d'une surface de support (19) dans laquelle on prévoit des évidements (20).

9. Dispositif selon la revendication 1 ou 5, **caractérisé en ce qu'**un terminal de chargement et de déchargement (4) est prévu en outre entre une voie ferrée intermédiaire (23) formant une boucle qui est prévue entre le système de transport souterrain et les moyens intermédiaires de transport et sur laquelle on prévoit des deuxièmes plates-formes de transport (25) qui se déplacent à une vitesse constante qui correspond à la vitesse de rotation des plates-formes de transport (18) du système de transport souterrain.

10. Dispositif selon la revendication 6, **caractérisé en ce que** la voie ferrée intermédiaire (23) formant une boucle est prévue en partie sous la terre, d'une part, et s'étend à cet endroit sur un certain segment (24) le long du système de transport, si nécessaire le long de la voie ferrée (2), et est prévue en partie sur la terre, d'autre part, là où elle peut travailler de manière conjointe avec les moyens intermédiaires de transport.

11. Dispositif selon la revendication 1, **caractérisé en ce que** les moyens de transfert sont constitués à titre principal par des traverses (17) auxquelles on peut imprimer un mouvement de haut en bas et de bas en haut et sur lesquelles on peut prévoir un conteneur (5), et auxquelles on peut également imprimer un mouvement latéral.

12. Dispositif selon les revendications 8 et 11, **caractérisé en ce que** les traverses (17) peuvent travailler de manière conjointe avec les évidements (20) pratiqués dans les plates-formes de transport (18).

13. Dispositif selon la revendication 1, **caractérisé en ce que** les moyens de transfert sont constitués à titre principal par des fourches (27) à fonctionnement latéral qui sont prévues sur les moyens intermédiaires de transport ou, si nécessaire, sur les plates-formes de transport (25) d'une voie ferrée intermédiaire (23) formant une boucle qui peut être prévue le cas échéant.
